# EUROPEAN PATENT APPLICATION

(11) **EP 4 761 149 A1**
(43) Date of publication of application: **17.06.2026**
(21) Application number: 24850733.7
(22) Date of filing: 08.07.2024
(51) Int. Cl.: H04B 17/309

(54) **SIGNAL MEASUREMENT METHOD AND APPARATUS, SIGNAL TRANSMISSION METHOD AND APPARATUS, AND TERMINAL, NETWORK DEVICE AND FORWARDING NODE**

(30) Priority: 07.08.2023 CN 202310986246
(71) Applicant: Datang Mobile Communications Equipment Co., Ltd., Beijing 100085 (CN)
(72) Inventor: ZHANG, Xin, Beijing 100085 (CN); SONG, Lei, Beijing 100085 (CN); SU, Xin, Beijing 100085 (CN)
(74) Representative: Studio Torta S.p.A.
(86) International application number: PCT/CN2024/104192
(87) International publication number: WO 2025/031082

(57) **Abstract**

The present disclosure provides signal measurement, transmission method, device, terminal, network device and forwarding node, relating to the field of communication technology. The signal measurement method is performed by the terminal and includes: receiving a modulated signal sent by a forwarding node, where the modulated signal is obtained by the forwarding node modulating a network device measurement signal, the modulated signal includes the network device measurement signal and a forwarding node measurement signal, the forwarding node measurement signal corresponds to a beam of the forwarding node; and obtaining a target measurement result according to the modulated signal, where the target measurement result includes beam quality corresponding to the beam of the forwarding node.

## Description

### CROSS-REFERENCE TO RELATED APPLICATION

The present disclosure claims priority to Chinese patent application No. 202310986246.X, filed with the Chinese Patent Office on August 7, 2023, entitled "SIGNAL MEASUREMENT, TRANSMISSION METHOD, DEVICE, TERMINAL, NETWORK DEVICE AND FORWARDING NODE", the entire contents of which are incorporated herein by reference.

### TECHNICAL FIELD

The present disclosure relates to the field of communication technology, and in particular to signal measurement, transmission method, device, terminal, network device and forwarding node.

### BACKGROUND

High-frequency bands have short wavelengths, poor reflection and diffraction properties, and large path losses, so multi-beam communication coverage is usually used. To ensure user communication quality, it is necessary to measure and report the quality of the transmit and receive beams, to switch the optimal transmit and receive beam pairs in a timely manner according to channel changes. However, in wireless communication systems that relay base station signals through a forwarding node (e.g., Reconfigurable Intelligent Surface (RIS)), an additional hop is added between the base station and the User Equipment (UE, also known as the terminal). The link quality of the forwarding node also affects communication of the terminal. Therefore, how to achieve beam measurement of the forwarding node by the terminal is an urgent problem to be solved.

### SUMMARY

Embodiments of the present disclosure provide signal measurement, transmission method, device, terminal, network device and forwarding node to achieve measurement on beams of the forwarding node.

To address the aforementioned technical problems, an embodiment of the present disclosure provides a signal measurement method, performed by a terminal and comprising:
receiving a modulated signal sent by a forwarding node, wherein the modulated signal is obtained by the forwarding node modulating a network device measurement signal, the modulated signal comprises the network device measurement signal and a forwarding node measurement signal, the forwarding node measurement signal corresponds to a beam of the forwarding node;
obtaining a target measurement result according to the modulated signal, wherein the target measurement result comprises beam quality corresponding to the beam of the forwarding node.

In some embodiments, the method further comprises:
sending measurement report information to a network device according to the target measurement result, wherein the measurement report information comprises at least one of the following: the beam quality corresponding to the beam of the forwarding node, or beam indication information corresponding to the beam of the forwarding node.

In some embodiments, the beam indication information comprises at least one of the following:
a beam identifier; or
a forwarding node measurement signal identifier corresponding to the beam.

In some embodiments, the receiving a modulated signal sent by a forwarding node comprises:
obtaining configuration information;
receiving the modulated signal sent by the forwarding node through at least one beam during a measurement occasion indicated by the configuration information;
wherein the configuration information comprises at least one of the following:
   at least one measurement occasion;
   a beam identifier of the beam of the forwarding node; or
   a forwarding node measurement signal identifier corresponding to the beam of the forwarding node.

An embodiment of the present disclosure further provides a signal transmission method, performed by a forwarding node and comprising:
modulating a received network device measurement signal to obtain a modulated signal, wherein the modulated signal comprises the network device measurement signal and a forwarding node measurement signal, the forwarding node measurement signal corresponds to a beam of the forwarding node;
sending the modulated signal to a terminal.

In some embodiments, the modulating a received network device measurement signal to obtain a modulated signal comprises:
switching a control matrix at a preset time point to modulate the received network device measurement signal to obtain the modulated signal.

In some embodiments, the switching a control matrix at a preset time point to modulate the received network device measurement signal to obtain the modulated signal comprises:
obtaining control configuration information, wherein the control configuration information comprises the control matrix, or the control configuration information comprises a reflection coefficient matrix and the forwarding node measurement signal;
switching the control matrix at the preset time point according to the control configuration information to modulate the received network device measurement signal to obtain the modulated signal;
wherein the control matrix is determined by the reflection coefficient matrix and the forwarding node measurement signal.

An embodiment of the present disclosure further provides an information transmission method, performed by a network device and comprising:
sending a network device measurement signal to a forwarding node;
receiving measurement report information sent by a terminal, wherein the measurement report information comprises at least one of the following: beam quality corresponding to a beam of the forwarding node, or beam indication information corresponding to the beam of the forwarding node;
wherein the measurement report information is sent according to a target measurement result, the target measurement result is obtained by the terminal according to a modulated signal sent by the forwarding node, the target measurement result comprises beam quality corresponding to the beam of the forwarding node;
the modulated signal is obtained by the forwarding node modulating the network device measurement signal, the modulated signal comprises the network device measurement signal and a forwarding node measurement signal, the forwarding node measurement signal corresponds to the beam of the forwarding node.

In some embodiments, the method further comprises:
sending configuration information to the terminal, wherein the configuration information comprises at least one of the following:
at least one measurement occasion;
a beam identifier of the beam of the forwarding node; or
a forwarding node measurement signal identifier corresponding to the beam of the forwarding node.

In some embodiments, the method further comprises:
sending control configuration information to the forwarding node, wherein the control configuration information comprises a control matrix, or the control configuration information comprises a reflection coefficient matrix and the forwarding node measurement signal;
wherein the control matrix is determined by the reflection coefficient matrix and the forwarding node measurement signal.

In some embodiments, the beam indication information comprises at least one of the following:
a beam identifier; or
a forwarding node measurement signal identifier corresponding to the beam.

An embodiment of the present disclosure further provides a terminal, comprising a memory, a transceiver, and a processor;
wherein the memory is configured to store a computer program; the transceiver is configured to send and receive data under control of the processor; and the processor is configured to read the computer program in the memory and perform following operations:
receiving a modulated signal sent by a forwarding node via the transceiver, wherein the modulated signal is obtained by the forwarding node modulating a network device measurement signal, the modulated signal comprises the network device measurement signal and a forwarding node measurement signal, the forwarding node measurement signal corresponds to a beam of the forwarding node;
obtaining a target measurement result according to the modulated signal, wherein the target measurement result comprises beam quality corresponding to the beam of the forwarding node.

In some embodiments, the processor is configured to read the computer program in the memory and perform following operations:
sending measurement report information to a network device according to the target measurement result, wherein the measurement report information comprises at least one of the following: the beam quality corresponding to the beam of the forwarding node, or beam indication information corresponding to the beam of the forwarding node.

In some embodiments, the beam indication information comprises at least one of the following:
a beam identifier; or
a forwarding node measurement signal identifier corresponding to the beam.

In some embodiments, the processor is configured to read the computer program in the memory and perform following operations:
obtaining configuration information;
receiving the modulated signal sent by the forwarding node through at least one beam during a measurement occasion indicated by the configuration information;
wherein the configuration information comprises at least one of the following:
   at least one measurement occasion;
   a beam identifier of the beam of the forwarding node; or
   a forwarding node measurement signal identifier corresponding to the beam of the forwarding node.

An embodiment of the present disclosure further provides a forwarding node, comprising a memory, a transceiver, and a processor;
wherein the memory is configured to store a computer program; the transceiver is configured to send and receive data under control of the processor; and the processor is configured to read the computer program in the memory and perform following operations:
modulating a received network device measurement signal to obtain a modulated signal, wherein the modulated signal comprises the network device measurement signal and a forwarding node measurement signal, the forwarding node measurement signal corresponds to a beam of the forwarding node;
sending the modulated signal to a terminal via the transceiver.

In some embodiments, the processor is configured to read the computer program in the memory and perform following operations:
switching a control matrix at a preset time point to modulate the received network device measurement signal to obtain the modulated signal.

In some embodiments, the processor is configured to read the computer program in the memory and perform following operations:
obtaining control configuration information, wherein the control configuration information comprises the control matrix, or the control configuration information comprises a reflection coefficient matrix and the forwarding node measurement signal;
switching the control matrix at the preset time point according to the control configuration information to modulate the received network device measurement signal to obtain the modulated signal;
wherein the control matrix is determined by the reflection coefficient matrix and the forwarding node measurement signal.

An embodiment of the present disclosure further provides a network device, comprising a memory, a transceiver, and a processor;
wherein the memory is configured to store a computer program; the transceiver is configured to send and receive data under control of the processor; and the processor is configured to read the computer program in the memory and perform following operations:
sending a network device measurement signal to a forwarding node via the transceiver;
receiving measurement report information sent by a terminal, wherein the measurement report information comprises at least one of the following: beam quality corresponding to a beam of the forwarding node, or beam indication information corresponding to the beam of the forwarding node;
wherein the measurement report information is sent according to a target measurement result, the target measurement result is obtained by the terminal according to a modulated signal sent by the forwarding node, the target measurement result comprises beam quality corresponding to the beam of the forwarding node;
the modulated signal is obtained by the forwarding node modulating the network device measurement signal, the modulated signal comprises the network device measurement signal and a forwarding node measurement signal, the forwarding node measurement signal corresponds to the beam of the forwarding node.

In some embodiments, the processor is configured to read the computer program in the memory and perform following operations:
sending configuration information to the terminal via the transceiver, wherein the configuration information comprises at least one of the following:
at least one measurement occasion;
a beam identifier of the beam of the forwarding node; or
a forwarding node measurement signal identifier corresponding to the beam of the forwarding node.

In some embodiments, the processor is configured to read the computer program in the memory and perform following operations:
sending control configuration information to the forwarding node via the transceiver, wherein the control configuration information comprises a control matrix, or the control configuration information comprises a reflection coefficient matrix and the forwarding node measurement signal;
wherein the control matrix is determined by the reflection coefficient matrix and the forwarding node measurement signal.

In some embodiments, the beam indication information comprises at least one of the following:
a beam identifier; or
a forwarding node measurement signal identifier corresponding to the beam.

An embodiment of the present disclosure further provides a signal measurement device, applied to a terminal and comprising:
a first receiving unit, configured to receive a modulated signal sent by a forwarding node, wherein the modulated signal is obtained by the forwarding node modulating a network device measurement signal, the modulated signal comprises the network device measurement signal and a forwarding node measurement signal, the forwarding node measurement signal corresponds to a beam of the forwarding node;
a first obtaining unit, configured to obtain a target measurement result according to the modulated signal, wherein the target measurement result comprises beam quality corresponding to the beam of the forwarding node.

An embodiment of the present disclosure further provides a signal transmission device, applied to a forwarding node and comprising:
a second obtaining unit, configured to modulate a received network device measurement signal to obtain a modulated signal, wherein the modulated signal comprises the network device measurement signal and a forwarding node measurement signal, the forwarding node measurement signal corresponds to a beam of the forwarding node;
a first sending unit, configured to send the modulated signal to a terminal.

An embodiment of the present disclosure further provides an information transmission device, applied to a network device and comprising:
a second sending unit, configured to send a network device measurement signal to a forwarding node;
a second receiving unit, configured to receive measurement report information sent by a terminal, wherein the measurement report information comprises at least one of the following: beam quality corresponding to a beam of the forwarding node, or beam indication information corresponding to the beam of the forwarding node;
wherein the measurement report information is sent according to a target measurement result, the target measurement result is obtained by the terminal according to a modulated signal sent by the forwarding node, the target measurement result comprises beam quality corresponding to the beam of the forwarding node;
the modulated signal is obtained by the forwarding node modulating the network device measurement signal, the modulated signal comprises the network device measurement signal and a forwarding node measurement signal, the forwarding node measurement signal corresponds to the beam of the forwarding node.

An embodiment of the present disclosure further provides a processor-readable storage medium storing a computer program for causing a processor to perform the methods described above.

The beneficial effects of the present disclosure are as follows.

In above solutions, the beam quality corresponding to the beam of the forwarding node is obtained according to the modulated signal sent by the forwarding node and including the network device measurement signal and the forwarding node measurement signal. In other words, the network device measurement signal is modulated by the forwarding node so as to add the forwarding node measurement signal to the modulated signal sent by the forwarding node to the terminal, thereby enabling the terminal to measure the beam of the forwarding node.

### BRIEF DESCRIPTION OF THE DRAWINGS

To more clearly illustrate the technical solutions in the embodiments or related technologies of the present disclosure, the accompanying drawings used in the description of the embodiments or related technologies will be briefly introduced below. Obviously, the accompanying drawings described below are only some embodiments recorded in the present disclosure. For those skilled in the art, other drawings may be obtained according to these drawings without creative efforts.
FIG. 1 shows a structural diagram of a network system applicable to embodiments of the present disclosure;
FIG. 2 shows a schematic flowchart of a signal measurement method according to an embodiment of the present disclosure;
FIG. 3 shows a schematic diagram of RIS control matrix generation;
FIG. 4 shows a schematic diagram of a real-time beam measurement report process;
FIG. 5 shows a schematic diagram of a multi-time-unit joint measurement report process;
FIG. 6 shows a schematic flowchart of a signal transmission method according to an embodiment of the present disclosure;
FIG. 7 shows a schematic flowchart of an information transmission method according to an embodiment of the present disclosure;
FIG. 8 shows a unit schematic diagram of a signal measurement device according to an embodiment of the present disclosure;
FIG. 9 shows a structural diagram of a terminal according to an embodiment of the present disclosure;
FIG. 10 shows a unit schematic diagram of a signal transmission device according to an embodiment of the present disclosure;
FIG. 11 shows a structural diagram of a signal repeater according to an embodiment of the present disclosure;
FIG. 12 shows a unit schematic diagram of an information transmission device according to an embodiment of the present disclosure.

### DETAILED DESCRIPTION

The technical solutions in embodiments of the present disclosure will be clearly and completely described below with reference to the accompanying drawings. Obviously, the described embodiments are some embodiments of the present disclosure, but not all embodiments. All other embodiments obtained by those skilled in the art according to the embodiments in the present disclosure without creative efforts are within the scope of protection of the present disclosure.

The terms "first", "second", etc., used in the specification and claims of the present disclosure are used to distinguish similar objects and are not necessarily used to describe a specific order or sequence. It should be understood that the terms used in this way may be interchanged where appropriate so that the embodiments of the present disclosure described herein may be implemented, for example, in a sequence other than those illustrated or described herein. Furthermore, the terms "comprising" and "having", and any variations thereof, are intended to cover non-exclusive inclusion, such that a process, method, system, product, or device that includes a series of steps or units is not necessarily limited to those steps or units that are explicitly listed, but may include other steps or units that are not explicitly listed or that are inherent to such process, method, product, or device.

In embodiments of the present disclosure, the term "and/or" describes the relationship between related objects, indicating that there may be three relationships. For example, A and/or B may represent three situations: A exists alone, A and B exist simultaneously, and B exists alone. The character "/" generally indicates that the objects before and after it are in an "or" relationship. In embodiments of the present disclosure, the term "multiple" refers to two or more, and other quantifiers are similar.

In embodiments of the present disclosure, the words "exemplary" or "for example" are used to indicate that something is an example, illustration, or description. Any embodiment or design described as "exemplary" or "for example" in the present disclosure should not be construed as being more preferred or advantageous than other embodiments or designs. To be precise, the use of words such as "exemplary" or "for example" is intended to present the relevant concepts in a specific way.

The embodiments of the present disclosure are described below with reference to the accompanying drawings. The signal measurement, transmission method, device, terminal, network device and forwarding node provided in the embodiments of the present disclosure may be applied to wireless communication systems. The wireless communication system may be a system using 5^{th} Generation (5G) mobile communication technology (hereinafter referred to as 5G system). Those skilled in the art may understand that the 5G NR system is merely an example and not a limitation.

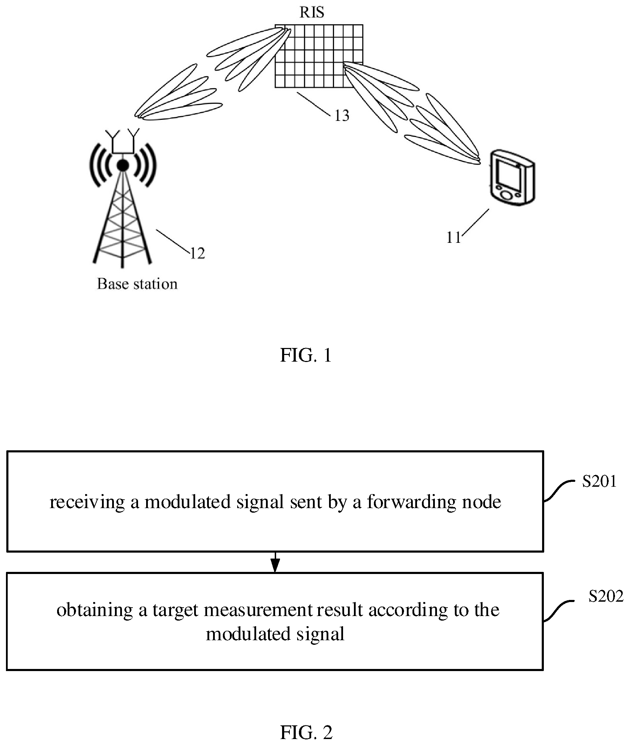

Referring to FIG. 1, which is a structural diagram of a network system applicable to embodiments of the present disclosure, as shown in FIG. 1, it includes a user terminal 11, a base station 12 and a RIS 13, and the base station 12 sends signals to the user terminal 11 through the RIS 13. The user terminal 11 may be a User Equipment (UE), such as a mobile phone, a tablet personal computer, a laptop computer, a personal digital assistant (PDA), a mobile internet device (MID), or a wearable device. It should be noted that the specific type of the user terminal 11 is not limited in the embodiments of the present disclosure. The aforementioned base station 12 may be a 5G or later version base station (e.g., gNB, 5G NR NB), or a base station in other communication systems, or referred to as Node B. It should be noted that in embodiments of the present disclosure, only a 5G base station is used as an example, but the specific type of the base station 12 is not limited.

First, according to the technical solution provided in the present disclosure, some technical terms that may be involved will be introduced.

In the RIS-based wireless communication link shown in FIG. 1, it is assumed that the base station has M beams, the RIS has L beams (assuming that the numbers of transport beams and receive beams of the RIS are the same), and the UE has N beams. The radio connection from the base station to the UE has a total of M*L*L*N transport-receive (TX-RX) beam pairs. Since the number of TX/RX beams in the millimeter-wave band is typically large, efficient beam measurement and report procedures are crucial for achieving adequate coverage while ensuring low overhead and UE complexity.

In a single-hop system of the relevant technology, for each TX beam, it is necessary to report the measurement quality of one beam pair (e.g., the optimal RX beam for a given TX beam). The optimal RX beam is obtained at the UE by beam measurement and stored in the memory of the UE, but does not need to be reported. When the data is subsequently transmitted to the terminal, the base station indicates the index of the selected TX beam to the terminal. The terminal may receive signals using the latest and optimal RX beam of the indicated TX beam (stored in the memory of the terminal during beam measurement). Secondly, among the M candidate TX beams, the qualities and/or indexes of K TX beams may be reported, where 1≤K≤M. If K=1, the UE may report the optimal TX beam index (without associated beam quality) as a recommendation to the base station for downlink (DL) beamforming. If K>1, the UE may report to the base station the metrics (e.g., the optimal K beams) of the K selected TX beams and their measurement qualities (whether relative or absolute). The network then determines how to use the K beams reported for DL transmission. For example, if the base station has only one Tx panel, it may compare the qualities of the reported Tx beams and select one Tx beam for DL transmission. If the base station has multiple Tx panels, different beams may be used on different panels for transmission.

Beam measurement metrics may include Reference Signal Received Power (RSRP), Reference Signal Received Quality (RSRQ), or Channel State Information (CSI). Different metrics lead to different UE complexities and may be applicable to different scenarios. For example, RSRP measurement is relatively simple and energy-efficient. It helps to quickly measure a large number of beams, which is useful for initial beam collection. CSI measurement is more complex, but provides more accurate beam information and may be used for beam refinement within a small group of candidate beams. CSI-based beam report is also faster because it integrates beam training and link adaptation in one step, allowing the base station to quickly schedule data after receiving the beam report. On the other hand, beam report based on RSRP or RSRQ requires a two-step procedure (e.g., beam training, and CSI report based on Reference Signal (RS) configuration of the beam training result), which prolongs scheduling latency.

The above beam measurement process only applies to the single-hop link from the base station to the UE. The objects for measurement and report are mainly the transport and receive beams on the base station side, while the transport and receive beams on the UE side are only measured but not reported. For two-hop links of RIS-based wireless communication links, taking downlink as an example, if the UE directly measures the signal from the base station, it may only directly measure the information of the overall equivalent channel of base station-RIS-UE, and obtain the beam measurement result of the transport beam used by the base station, but cannot measure the beam of the RIS-UE segment. The channel between the RIS and the UE is constantly changing due to the movement of the UE, and the measurement and report of the RIS transport and receive beams also need to be considered. Since the transport and receive beams of the RIS are controlled by a set of RIS phase shift matrices, that is, one RIS phase shift matrix corresponds to one RIS transport and receive beam pair; once the RIS phase shift matrix is determined, the direction of the RIS receive beam and the direction of the RIS transport beam are both determined (under far-field conditions). Therefore, the RIS receive beam and the RIS transport beam are abbreviated as RIS beam.

According to the analysis, embodiments of the present disclosure provide signal measurement, transmission method, device, terminal, network device and forwarding node to achieve measurement on beams of the forwarding node.

The method and device are based on the same concept of the application. Since the method and device solve problems in similar ways, the implementation of the device and method may refer to each other, and the repeated parts will not be described again.

As shown in FIG. 2, an embodiment of the present disclosure provides a measurement report method, performed by a terminal and including:
Step S201: receiving a modulated signal sent by a forwarding node;
where the modulated signal is obtained by the forwarding node modulating a network device measurement signal, the modulated signal includes the network device measurement signal and a forwarding node measurement signal, the forwarding node measurement signal corresponds to a beam of the forwarding node.

It should be noted that the forwarding node modulates the network device measurement signal and adds to the forwarding node measurement signal, enabling the terminal to measure the beam of the forwarding node according to the forwarding node measurement signal.

Step S202: obtaining a target measurement result according to the modulated signal, where the target measurement result includes beam quality corresponding to the beam of the forwarding node;
It should be noted that in the embodiment of the present disclosure, the forwarding node is located between the network device and the terminal and is responsible for forwarding the communication signals between the network device and the terminal. That is, the communication architecture of embodiments of the present disclosure is that the network device sends a signal to the forwarding node, and the forwarding node sends a reflected signal to the terminal. In some embodiments, the forwarding node in embodiments of the present disclosure may be a RIS, a network-controlled repeater (NCR), a relay device, or other devices that may perform signal forwarding.

In some embodiments of the present disclosure, the network device measurement signal may be a reference signal, such as a Channel State Information Reference Signal (CSI-RS); or a pilot signal, such as a Demodulation Reference Signal (DMRS); the forwarding node measurement signal may be a reference signal, a Rank Indication (RI), or a predefined sequence (such as a Zadoff-Chu (ZC) sequence, a Gold sequence, etc.).

It should be noted that when the forwarding node measurement signal is a predefined sequence (also known as a measurement sequence), each sequence corresponds to a beam of a forwarding node, and each beam of all forwarding node arrays in the predefined service area (e.g., cell) has a one-to-one corresponding sequence. The sequences corresponding to the beams of all forwarding nodes form a sequence set, which is known to the network device, the forwarding node, and the terminal side. It should also be noted that each beam of each forwarding node has unique identification. Forwarding node arrays in adjacent cells or service area use different sequence sets to ensure that the beams of forwarding nodes in adjacent cells or control nodes may be uniquely identified.

In some embodiments, the network device measurement signal and the beam of the network device (also referred to as the network device beam) are in one-to-one correspondence, and the forwarding node measurement signal and the beam of the forwarding node (also referred to as the forwarding node beam) are in one-to-one correspondence.

It should be noted that in embodiments of the present disclosure, the network device measurement signal is modulated by the forwarding node so as to add the forwarding node measurement signal to the modulated signal sent by the forwarding node to the terminal, thereby enabling the terminal to measure the beam of the forwarding node.

In some embodiments, in an implementation, the network device needs to send a network device measurement signal to the forwarding node. After receiving the network device measurement signal, the forwarding node needs to modulate the measurement signal to obtain a modulated signal, which includes the network device measurement signal and the forwarding node measurement signal. In some embodiments, the modulation of the network device measurement signal by the forwarding node may be either amplitude modulation or phase modulation on the network device measurement signal.

In some embodiments, after receiving the modulated signal sent by the forwarding node, the terminal needs to demodulate the modulated signal to obtain the forwarding node measurement signal. In some embodiments, the terminal may perform demodulation by means of filters, coherent or non-coherent demodulation, etc. to obtain the forwarding node measurement signal. After obtaining the forwarding node measurement signal, the terminal may measure the forwarding node measurement signal to obtain the beam quality corresponding to the beam of the forwarding node.

In some embodiments, after demodulating the modulated signal, the terminal may also obtain the network device measurement signal. That is, the terminal may obtain the network device measurement signal and the forwarding node measurement signal by demodulating the modulated signal. If the terminal only measures the forwarding node measurement signal, the terminal may only obtain the beam quality corresponding to the beam of the forwarding node. If the terminal measures the network device measurement signal and the forwarding node measurement signal respectively, the terminal may obtain the beam quality corresponding to the beam of the network device and the beam quality corresponding to the beam of the forwarding node respectively.

In some embodiments, in an implementation, the specific implementation of the forwarding node modulating the network device measurement signal to obtain the modulated signal includes:
switching a control matrix at a preset time point to modulate the received network device measurement signal to obtain the modulated signal.

It should be noted that since different control matrices correspond to different beam directions and measurement signals corresponding to the beams, switching the control matrix may modulate the forwarding node measurement signal into the network device measurement signal to obtain the modulated signal.

In some embodiments, in an implementation, the switching a control matrix at a preset time point to modulate the received network device measurement signal to obtain the modulated signal includes:
Step S11: obtaining control configuration information, where the control configuration information includes the control matrix, or the control configuration information includes a reflection coefficient matrix and the forwarding node measurement signal;
   In some embodiments, the control configuration information is typically transmitted from the network device to the forwarding node. For example, the network device may send the control configuration information to the forwarding node via a radio interface, or the network device may transmit the control configuration information to the forwarding node via a wired network.
Step S12: switching the control matrix at the preset time point according to the control configuration information to modulate the received network device measurement signal to obtain the modulated signal;
   where the control matrix is determined by the reflection coefficient matrix and the forwarding node measurement signal.

It should be noted that, in order to achieve modulation of the forwarding node, the network device usually sends control configuration information to the forwarding node. In some embodiments, if the control configuration information only includes the control matrix, it means that the calculation of the control matrix is implemented by the network device, and the forwarding node only needs to directly receive the control matrix sent by the network device and use it. This situation may avoid the latency and power consumption of the forwarding node in calculating the control matrix. If the control configuration information includes the reflection coefficient matrix and the forwarding node measurement signal, then the forwarding node needs to calculate the control matrix and then use the calculated control matrix.

It should be noted that the reflection coefficient matrix in the embodiment is used to represent the beam of the forwarding node. A reflection coefficient matrix represents a beam of a forwarding node and corresponds to directions of an incident signal and a reflected signal of a forwarding node panel. The reflection coefficient matrix may be determined by the network device according to prior information such as network deployment, channel information and/or beam information reported by the terminal. The forwarding node measurement signal corresponds to the beam of the forwarding node. That is, a forwarding node measurement signal represents the measurement information of a beam of the forwarding node. Usually, the forwarding node measurement signal corresponds to the beam index of the forwarding node.

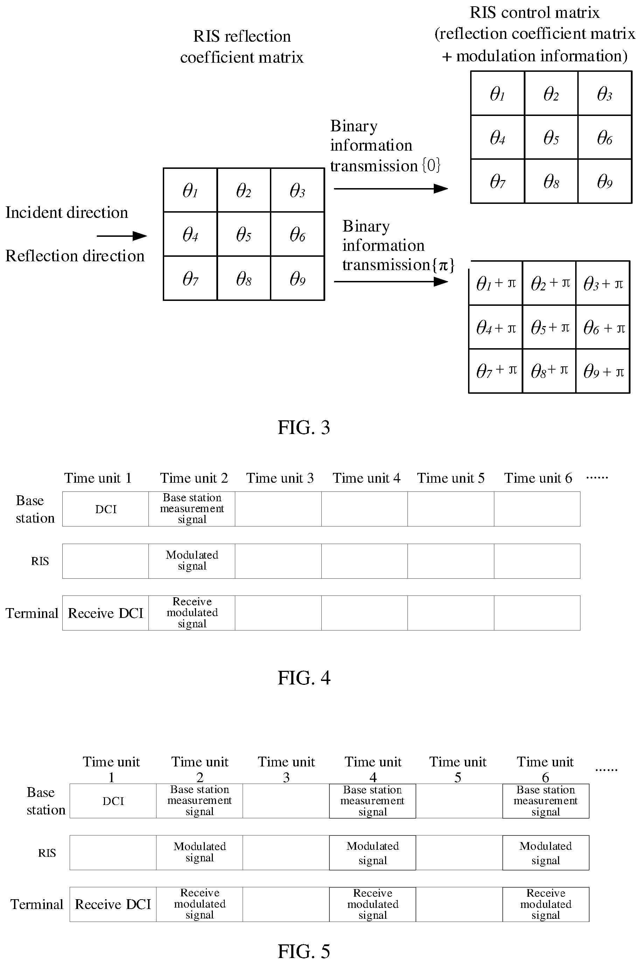

For example, taking the forwarding node as RIS and the beam of the forwarding node as the RIS beam as an example, a possible process for generating the control matrix (modulated by phase modulation) is as follows:
A RIS panel has two RIS beams. Two phase modulations are used to represent the beam indices of the two RIS beams (i.e., the added modulation information used to represent the RIS measurement signal) respectively. The generation process of the control matrix corresponding to the RIS is shown in FIG. 3.

It should be noted that after the terminal performs measurement to obtain beam quality, the terminal may also report beam-related information so that the network device may obtain the beam status of the forwarding node and select the better beam for signal forwarding. In some embodiments, in an implementation, after the obtaining a target measurement result according to the modulated signal, the method further includes:
sending measurement report information to a network device according to the target measurement result, where the measurement report information includes at least one of the following: the beam quality corresponding to the beam of the forwarding node, or beam indication information corresponding to the beam of the forwarding node.

It should be noted that when only the beam of the forwarding node is measured, the measurement report information sent by the terminal to the network device only includes the relevant information of the beam of the forwarding node, that is, the beam quality and/or the beam indication information corresponding to the beam of the forwarding node. If the terminal also measures the network device measurement signal, the terminal also needs to send the relevant information of the beam of the network device to the network device. For example, the relevant information of the beam of the network device includes the beam quality and/or the beam indication information corresponding to the beam of the network device.

In some embodiments, since the forwarding node may transmit the modulated signal using one beam or multiple beams, when only one beam is used for transmission, the terminal obtains the beam quality of that single beam, and may report only that beam quality. If multiple beams are used for transmission, the terminal obtains the beam qualities of multiple beams. In this case, the terminal may select the optimal beam for reporting. In some embodiments, the terminal may report the beam quality and beam indication information of the optimal beam, or the terminal may report only the beam indication information of the optimal beam. Alternatively, if the terminal obtains multiple beam qualities, the terminal may select optimal multiple beams for reporting. In some embodiments, the terminal may report the beam qualities and beam indication information of the optimal multiple beams, or the terminal may report the beam indication information of the optimal multiple beams.

For example, if the measurement report information only includes the beam quality corresponding to the beam of the forwarding node, it may be understood that the forwarding node uses only one beam to transmit the modulated signal. Since which beam the forwarding node uses for transmission is configured in advance, after the terminal reports the beam quality corresponding to the beam of the forwarding node through the measurement report information, the network device may learn which beam the beam quality corresponds to.

For example, if the measurement report information only includes the beam indication information corresponding to the beam of the forwarding node, it may be understood that the forwarding node usually uses multiple beams to transmit the modulated signal. The terminal may determine the beam qualities of multiple beams through measurement respectively. The terminal may select a beam with the optimal beam quality to report. After the terminal reports the beam indication information of the optimal beam through the measurement report information, the network device may learn which beam has the optimal beam quality.

For example, when the measurement report information includes the beam quality and beam indication information corresponding to the beam of the forwarding node, in a scenario, it may be understood that the forwarding node uses one beam to transmit the modulated signal. To clarify the correspondence between the beam and the beam quality, the terminal needs to report both the beam quality and beam indication information simultaneously. In another scenario, it may be understood that the forwarding node typically uses multiple beams to transmit the modulated signal. The terminal may determine the beam quality of each beam through measurement, and may select the beam with the optimal beam quality to report. The terminal may simultaneously report both the beam quality and the beam indication information corresponding to the beam of the forwarding node. After receiving information sent from the terminal, the network device may learn which beam is the optimal beam and corresponding beam quality thereof. Alternatively, it may be understood that the forwarding node typically uses multiple beams to transmit the modulated signal. The terminal may determine the beam quality of each beam through measurement. The terminal may then select several beams with superior beam quality to report. In this case, the terminal needs to simultaneously report the beam quality and beam indication information of the superior beams. After receiving the information sent from the terminal, the network device may learn the superior beams and their corresponding beam qualities. The network device may then select the optimal beam from these beams for signal transmission.

In some embodiments, the beam indication information includes at least one of the following:
A11, a beam identifier;
   It should be noted that the beam identifier may be a beam index or a beam number.
A12, a forwarding node measurement signal identifier corresponding to the beam;
   It should be noted that since each beam corresponds to a different forwarding node measurement signal, the forwarding node measurement signal may be used for beam indication. In some embodiments, the forwarding node measurement signal identifier may be a measurement signal index, an identifier of the sequence corresponding to the measurement signal, or a sequence corresponding to the measurement signal.

For example, the beam indication information only includes the beam identifier. By indication of the beam identifier, the network device may clearly learn which beam the terminal measured. This is applicable to scenarios where the beam identifier is explicitly configured for the terminal.

For example, the beam indication information only includes the forwarding node measurement signal identifier corresponding to the beam. It should be noted that since the forwarding node measurement signal corresponds one-to-one with the beam, after the network device obtains the forwarding node measurement signal identifier, the network device may determine the corresponding beam according to the forwarding node measurement signal identifier. This is applicable to scenarios where the beam identifier is not explicitly configured for the terminal. The terminal may determine what the measured forwarding node measurement signal is by demodulating the modulated signal.

For example, the beam indication information includes the beam identifier and the forwarding node measurement signal identifier corresponding to the beam. The direct indication of these two types of information enables the network device to quickly determine what the forwarding node measurement signal being measured by the terminal is and which beam is measured, without the need for the network device to determine according to the correspondence between the beam and the forwarding node measurement signal.

It is important to note that since measurement signals are usually composed of sequences, and different measurement signals correspond to different sequences, the measurement signal may be indicated by the sequence.

In some embodiments, the implementation of receiving a modulated signal sent by a forwarding node includes:
Step S21: obtaining configuration information;
In some embodiments, the configuration information includes at least one of the following:
B11, at least one measurement occasion;
B12, a beam identifier of the beam of the forwarding node; or
B13, a forwarding node measurement signal identifier corresponding to the beam of the forwarding node.

It should be noted that the configuration information must typically include the measurement occasion, which indicates the time unit position for sending the measurement signal. By informing the terminal of the relevant information of the beam of the forwarding node, the terminal may learn which beams are used for signal transmission.

In some embodiments, B12 and B13 are optional. When there are at least two measurement occasions (or time units), the terminal may determine which beams are used for signal transmission according to the joint detection result of multiple measurement occasions. It should be noted that when there are at least two measurement occasions, the same network device measurement signal may be sent in multiple time units (for example, the same Channel State Information Reference Signal (CSI-RS) resource may be configured in multiple Channel State Information (CSI) resource settings or multiple CSI resource sets). At the same time, the forwarding node may be configured to add the same forwarding node measurement signal in multiple time units. The terminal may receive signals in multiple time units according to predefined rules or instructions from the network device, and perform joint detection according to the signals of the multiple time units to obtain the beam quality.

In some embodiments, when there is only one measurement occasion, B12 and/or B13 configuration is typically required so that the terminal may learn which beams are measured.

In some embodiments, the configuration information may be sent to the terminal by the network device or may be defined in the protocol; and the different contents contained in the configuration information may be obtained in different ways. For example, B11 may be obtained as defined in the protocol, while B12 and/or B13 may be obtained as configured by the network device. In some embodiments, when configuration information is configured by the network device, the network device may send the configuration information via DCI.

For example, when the configuration information includes one measurement occasion and the beam identifier of the beam of the forwarding node, the terminal receives the modulated signal at the measurement occasion indicated by the configuration information, and then measures the forwarding node measurement signal obtained by demodulation. This allows the terminal to obtain the beam quality corresponding to the beam of the forwarding node indicated by the configuration information. By configuration of the measurement occasion and the beam identifier, the terminal may clearly learn which beams are measured.

For example, when the configuration information includes one measurement occasion, the beam identifier of the beam of the forwarding node, and the forwarding node measurement signal identifier corresponding to the beam of the forwarding node, the terminal receives the modulated signal at the measurement occasion indicated by the configuration information, and then measures the forwarding node measurement signal obtained by demodulation. This allows the terminal to obtain the beam quality corresponding to the beam of the forwarding node indicated by the configuration information. By configuration of the measurement occasion, the beam identifier, and the forwarding node measurement signal identifier, the terminal may clearly learn which beams are measured and determine what the forwarding node measurement signal corresponding to the measured beam is.

For example, when the configuration information includes multiple measurement occasions, the terminal receives the modulated signal at the measurement occasions indicated by the configuration information, and then performs joint measurement on the forwarding node measurement signal obtained by demodulation in multiple measurement occasions. This allows the terminal to obtain beam quality corresponding to the specific beam of the forwarding node. In this way, there is no need to configure the beam and the forwarding node measurement signal, which may save the signaling overhead of the configuration information.

For example, when the configuration information includes multiple measurement occasions and the beam identifier of the beam of the forwarding node, the terminal receives the modulated signal at the measurement occasions indicated by the configuration information, and then performs joint measurement on the forwarding node measurement signal obtained by demodulation in multiple measurement occasions. This allows the terminal to obtain the beam quality corresponding to the beam of the forwarding node indicated by the configuration information. In this way, the terminal does not need to separately determine which beams are measured according to the joint measurement, which may reduce the measurement overhead of the terminal and improve the speed for obtaining the beam quality.

For example, when the configuration information includes multiple measurement occasions and the forwarding node measurement signal identifier corresponding to the beam of the forwarding node, the terminal receives the modulated signal at the measurement occasions indicated by the configuration information, and then performs joint measurement on the forwarding node measurement signal obtained by demodulation in multiple measurement occasions. This allows the terminal to obtain the beam quality corresponding to the beam of the forwarding node indicated by the configuration information. Moreover, the forwarding node measurement signal identifier and the beam are in one-to-one correspondence. Through the correspondence between the forwarding node measurement signal identifier and the beam, it is possible to directly determine which beams are measured, thereby reducing the measurement overhead of the terminal and improving the speed for obtaining the beam quality.

For example, when the configuration information includes multiple measurement occasions, the beam identifier of the beam of the forwarding node, and the forwarding node measurement signal identifier corresponding to the beam of the forwarding node, the terminal receives the modulated signal at the measurement occasions indicated by the configuration information, and then performs joint measurement on the forwarding node measurement signal obtained by demodulation in multiple measurement occasions. This allows the terminal to obtain the beam quality corresponding to the beam of the forwarding node indicated by the configuration information. In this way, the terminal does not need to separately determine which beams are measured according to the joint measurement. Moreover, the forwarding node measurement signal identifier and the beam are in one-to-one correspondence. The terminal may directly determine what forwarding node measurement signal is used to measure the beam being measured through the indication of the configuration information. This way may reduce the measurement overhead of the terminal and improve the speed for obtaining the beam quality.

Step S22: receiving the modulated signal sent by the forwarding node through at least one beam during a measurement occasion indicated by the configuration information;
It should be noted that by obtaining the configuration information, the terminal may learn how the forwarding node transmits the modulated signal, thereby improving the accuracy of the terminal receiving the modulated signal.

In summary, the embodiments of the present disclosure propose a beam measurement and report method for a forwarding node. While the forwarding node reflects the network device measurement signal transmitted by the network device, the network device measurement signal is modulated using the forwarding node (e.g., by adding a fixed phase or overall amplitude modulation). Then, the beam of the forwarding node is measured using modulation information added by modulation (i.e., the forwarding node measurement signal) to obtain the measurement result. This enables the terminal to measure the beam of the forwarding node, facilitates the network device to control the beam of the forwarding node, and improves the communication reliability of the terminal.

The following describes the specific application of the embodiments of the present disclosure, taking the communication between the base station and the terminal via RIS as an example.

First, it should be noted that the signal received by the terminal may fall into one of the following three situations:
A. The terminal detects the measurement signal of the base station and the additional RIS measurement signal after RIS modulation.
   This situation indicates that the terminal may receive signals sent by the base station and forwarded by RIS.
B. The terminal detects additional information (RIS beam indication) obtained after RIS modulation on an unknown signal (signal from other environmental signal sources). This situation may be understood as the terminal only detecting the RIS measurement signal.
   This situation indicates that the terminal is within the coverage area of the RIS, but the RIS is not forwarding any signals sent by the base station.
C. The terminal detects the measurement signal sent by the base station, but does not detect the additional RIS measurement signal after RIS modulation, that is, the terminal does not detect the RIS measurement signal.

This situation indicates that the terminal may directly receive the signal sent by the base station, without the need of RIS forwarding.

It should also be noted that when the signal received by the terminal contains both A and C, it means that the terminal may receive signals from both the direct link and the reflected link (RIS forwarding) at the same time.

The embodiments disclosed herein may include the following application scenarios:

### Application Scenario 1: Measurement Report based on a Single Time Unit

The terminal performs measurement report at the measurement occasion indicated by the base station, according to the configuration information configured by the base station (the configuration information includes the base station beam index, RIS beam index, and measurement occasion (also known as reception occasion)). The specific process is as follows:
Step 11: The terminal receives configuration information (e.g., DCI) sent by the base station and obtains the base station beam index, RIS beam index, and measurement occasion.
Step 12: The terminal receives the modulated signal at the measurement occasion according to the configuration information, and performs detection of the base station measurement signal and the RIS measurement signal according to the beam index indicated by the base station to obtain the corresponding beam quality (e.g., beam RSRP).
Step 13: The terminal reports beam information (beam quality and/or beam identifier) to the base station according to the predefined beam report criteria.

A possible beam measurement report process is shown in FIG. 4. The base station and the terminal transmit and receive downlink control information in time unit 1, and the base station, RIS and the terminal transmit and detect signals in time unit 2.

It should be noted that the above process may be used for multi-beam or single-beam measurement and report. Different measurement processes may define different beam report criteria, or may define the same report criteria. For example:
Single-beam measurement may only report beam quality;
Multi-beam measurement may report one or more beam identifiers that meet predefined rules, such as the beam with the highest RSRP;
Multi-beam measurement may report one or more beam identifiers and beam qualities that meet predefined rules.

### Main implementation at the RIS side:

The RIS switches the control matrix at a preset time point according to the control configuration information configured by the base station, that is, modulates the base station measurement signal incident on the RIS panel, obtains the modulated signal, and sends the modulated signal to the terminal.

### Main implementation at the base station:

The base station sends configuration information to the terminal, instructing the terminal to perform beam measurement at the measurement occasion and perform measurement report.

The base station determines the control matrix according to prior information such as network deployment, channel information and/or beam information reported by the UE, and instructs the RIS to switch the control matrix at a preset time point; or, the base station sends the reflection coefficient matrix and RIS measurement signal to the terminal.

### Application Scenario 2: Measurement Report Based on Multiple Time Units

Starting from the n-th transmission time unit (e.g., n Orthogonal frequency division multiplex (OFDM) symbols) after sending the control configuration information, the base station transmits the same base station measurement signal for M consecutive time units.

Starting from the n-th transmission time unit (e.g., n OFDM symbols) after receiving the control configuration information, the RIS transmits a modulated signal every L time units, and continuously transmits M identical modulated signals.

According to the configuration information sent by the base station, the terminal receives modulated signals at multiple predefined measurement occasions to perform joint measurement and report. The specific process is as follows:
Step 21: The terminal receives configuration information (e.g., downlink control information, DCI) sent by the base station to obtain the measurement occasion.
Step 22: The terminal receives the modulated signal according to the obtained measurement occasion, performs detection together with multiple RIS measurement signals in the modulated signal to determine the beam quality (e.g., the RSRP of the beam) of the RIS beam; performs detection together with multiple base station measurement signals in the modulated signal to determine the beam quality (e.g., the RSRP of the beam) of the base station beam.
Step 23: The terminal reports beam information (beam quality information and/or beam identifier) to the base station according to the predefined beam report criteria.

FIG. 5 shows a possible multi-time-unit joint beam measurement report process. After receiving all M=3 modulated signals, the terminal performs joint detection on the base station measurement signals and the RIS measurement signals in all 3 modulated signals to determine the beam index and beam quality of the RIS beam and the beam index and beam quality of the base station beam.

### Application Scenario 3: The terminal identifies that the received signal is a signal directly transmitted by the base station.

The terminal performs measurement report at the measurement occasion indicated by the base station, according to the configuration information sent by the base station. The specific process is as follows:
Step 31: The terminal receives configuration information (e.g., DCI) sent by the base station and obtains the base station beam index and measurement occasion.
Step 32: The terminal receives the base station measurement signal (which has a one-to-one correspondence with the beam index) at the measurement occasion, performs measurement signal detection according to the beam index indicated by the base station and obtains only the base station beam index and the corresponding beam quality.
Step 33: The terminal determines that the received signal is a signal directly transmitted by the base station, and only reports the beam quality and/or beam identifier of the base station beam to the base station.

### Application Scenario 4: The terminal identifies that the received signal is a signal forwarded by the RIS.

The terminal performs measurement report at the measurement occasion indicated by the base station, according to the configuration information sent by the base station. The specific process is as follows:
Step 41: The terminal receives configuration information (e.g., DCI) sent by the base station and obtains the measurement occasion and RIS beam index.
Step 42: The terminal receives the modulated signal (which has a one-to-one correspondence with the beam index) at the measurement occasion, performs signal detection according to the beam index indicated by the base station and obtains only the RIS beam index and the corresponding beam quality.
Step 43: The terminal determines that the received signal is a signal forwarded by the RIS, and only reports the beam quality and/or beam identifier of the RIS beam to the base station.

### Application Scenario 5

The terminal receives signals at the measurement occasion according to the base station configuration, and detects a modulated signal including the RIS measurement signal, and a signal including only the base station measurement signal but not the RIS measurement signal. The terminal may select the beam information (including beam index and/or beam quality) of the stronger link according to the beam qualities obtained by measurement and report it, or may report the information of both links, and the base station may determine which link to select for signal transmission.

In summary, the embodiments disclosed herein solve the problem that in RIS-based wireless communication systems, it is difficult to measure and report RIS beams because RIS lacks signal processing capabilities. The beam measurement and report method proposed in embodiments of the present disclosure can solve the problem of RIS beam measurement and report with low overhead and complexity.

The technical solutions provided in embodiments of the present disclosure may be applied to a variety of systems, especially 5G systems. For example, the applicable system may be Global System of Mobile Communication (GSM) system, Code Division Multiple Access (CDMA) system, Wideband Code Division Multiple Access (WCDMA) General Packet Radio Service (GPRS) system, Long Term Evolution (LTE) system, LTE Frequency Division Duplex (FDD) system, LTE Time Division Duplex (TDD) system, Long Term Evolution Advanced (LTE-A) system, Universal Mobile Telecommunication System (UMTS), Worldwide Interoperability for Microwave Access (WiMAX) system, and 5G New Radio (NR) system, etc. These systems all include terminal devices and network devices. The system may also include a core network component, such as an evolved packet system (EPS) or a 5G system (5GS), etc.

The terminal involved in the embodiments of the present disclosure, also known as a terminal device, may be a device that provides voice and/or data connectivity to a user, a handheld device with wireless connectivity, or other processing devices connected to a wireless modem, etc. The name of the terminal device may be different in different systems. For example, in a 5G system, the terminal device may be called User Equipment (UE). Wireless terminal devices may communicate with one or more core networks (CNs) via a radio access network (RAN). Wireless terminal devices may be mobile terminal devices, such as mobile phones (or "cellular" phones) and computers with mobile terminal devices, for example, portable, pocket-sized, handheld, computer-embedded, or vehicle-mounted mobile devices, which exchange voice and/or data with the radio access network. Examples include Personal Communication Service (PCS) phone, cordless phone, Session Initiated Protocol (SIP) phone, Wireless Local Loop (WLL) station, and Personal Digital Assistant (PDA). Wireless terminal device may also be referred to as a system, a subscriber unit, a subscriber station, a mobile station, a mobile, a remote station, an access point, a remote terminal, an access terminal, a user terminal, a user agent, or a user device, but is not limited to these terms in the embodiments disclosed herein.

The network device involved in the embodiments of the present disclosure may be a base station, which may include multiple cells that provide services to terminals. Depending on the specific application, a base station may also be called an access point, or may be a device in the access network that communicates with wireless terminal devices through one or more sectors on the radio interface, or other names. The network device may be used to exchange received air frames with Internet Protocol (IP) packets, and act as a router between wireless terminal devices and the rest of the access network, which may include Internet Protocol (IP) communication networks. The network device may also coordinate the management of attributes for radio interfaces. For example, the network device involved in the present disclosure may be a base transceiver station (BTS) in Global System for Mobile communications (GSM) or Code Division Multiple Access (CDMA), a NodeB in Wide-band Code Division Multiple Access (WCDMA), an evolutional Node B (eNB or e-NodeB) in a long term evolution (LTE) system, a 5G base station (gNB) in a next generation system, a Home evolved Node B (HeNB), a relay node, a femto, a pico, etc., and is not limited in the present disclosure. In some network architectures, the network device may include centralized unit (CU) nodes and distributed unit (DU) nodes, which may also be geographically separated.

Network devices and terminal devices may each use one or more antennas to perform multiple input multiple output (MIMO) transmission. MIMO transmission may be single user MIMO (SU-MIMO) or multiple user MIMO (MU-MIMO). Depending on the shape and number of the antenna combination, MIMO transmission may be 2Dimension MIMO (2D-MIMO), 3Dimension MIMO (3D-MIMO), Full Dimension MIMO (FD-MIMO), or massive-scale MIMO (massive-MIMO), or may be diversity transmission, pre-coded transmission, or beamforming transmission, etc.

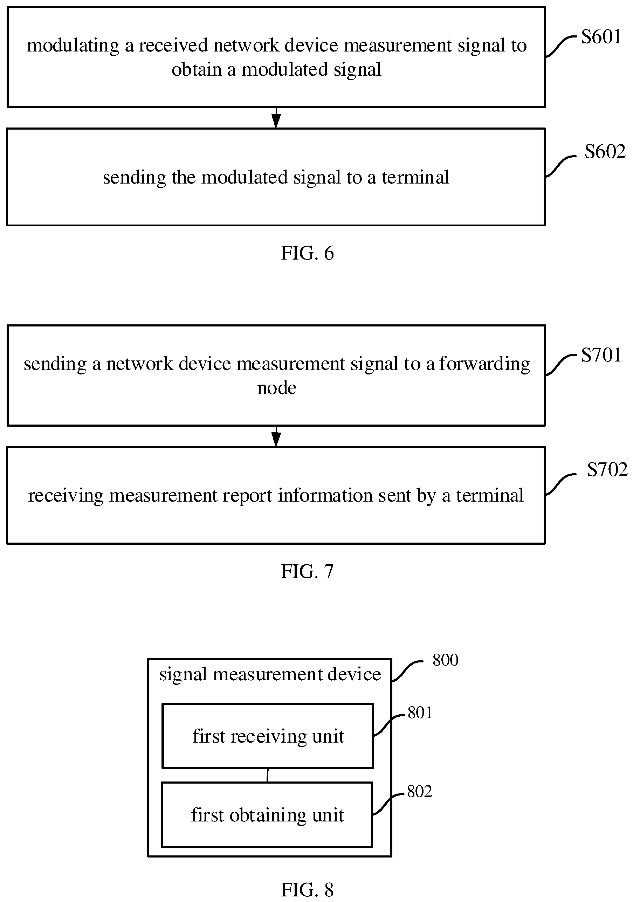

As shown in FIG. 6, an embodiment of the present disclosure provides an information transmission method, applied to a forwarding node and including:
Step S601: modulating a received network device measurement signal to obtain a modulated signal, where the modulated signal includes the network device measurement signal and a forwarding node measurement signal, the forwarding node measurement signal corresponds to a beam of the forwarding node;
In some embodiments of the present disclosure, the forwarding node may be a device that may perform signal forwarding such as RIS or NCR.

The network device measurement signal in the embodiment of the present disclosure may be a reference signal, such as a channel state information reference signal (CSI-RS); or a pilot signal, such as a demodulation reference signal (DMRS); the forwarding node measurement signal may be a reference signal, a rank indication (RI), or a predefined sequence (e.g., a ZC sequence).

Step S602: sending the modulated signal to a terminal;
It should be noted that in the embodiment of the present disclosure, the network device measurement signal is modulated by the forwarding node so as to add the forwarding node measurement signal to the modulated signal sent by the forwarding node to the terminal, thereby enabling the terminal to measure the beam of the forwarding node.

In some embodiments, in an implementation, the modulating a received network device measurement signal to obtain a modulated signal includes:
switching a control matrix at a preset time point to modulate the received network device measurement signal to obtain the modulated signal.

It should be noted that since different control matrices correspond to different beam directions and measurement signals corresponding to the beams, switching the control matrix may modulate the forwarding node measurement signal into the network device measurement signal to obtain the modulated signal.

In some embodiments, in an implementation, the switching a control matrix at a preset time point to modulate the received network device measurement signal to obtain the modulated signal includes:
obtaining control configuration information, where the control configuration information includes the control matrix, or the control configuration information includes a reflection coefficient matrix and the forwarding node measurement signal;
In some embodiments, the control configuration information is typically transmitted from the network device to the forwarding node. For example, the network device may send the control configuration information to the forwarding node via a radio interface, or the network device may transmit the control configuration information to the forwarding node via a wired network.
switching the control matrix at the preset time point according to the control configuration information to modulate the received network device measurement signal to obtain the modulated signal;
where the control matrix is determined by the reflection coefficient matrix and the forwarding node measurement signal.

It should be noted that, in order to achieve modulation of the forwarding node, the network device usually sends control configuration information to the forwarding node. In some embodiments, if the control configuration information only includes the control matrix, it means that the calculation of the control matrix is implemented by the network device, and the forwarding node only needs to directly receive the control matrix sent by the network device and use it. If the control configuration information includes the reflection coefficient matrix and the forwarding node measurement signal, then the forwarding node needs to calculate the control matrix and then use the calculated control matrix.

It should be noted that the reflection coefficient matrix in the embodiment is used to represent the beam of the forwarding node. A reflection coefficient matrix represents a beam of a forwarding node and corresponds to directions of an incident signal and a reflected signal of a forwarding node panel. The reflection coefficient matrix may be determined by the network device according to prior information such as network deployment, and/or channel information and/or beam information reported by the terminal. The forwarding node measurement signal corresponds to the beam, that is, a forwarding node measurement signal represents the measurement information of a beam of the forwarding node. Usually, the forwarding node measurement signal corresponds to the beam index.

It should be noted that through sending of the control configuration information, the forwarding node may accurately perform modulation, thereby improving the accuracy of modulation.

It should be noted that all descriptions of the forwarding node in the above embodiments are applicable to the embodiments of the signal transmission method and may achieve the same technical effect, so will not be repeated here.

As shown in FIG. 7, an embodiment of the present disclosure provides an information transmission method, applied to a network device and including:
Step S701: sending a network device measurement signal to a forwarding node;
   It should be noted that the network device measurement signal corresponds to the beam of the network device.
Step S702: receiving measurement report information sent by a terminal, where the measurement report information includes at least one of the following: beam quality corresponding to a beam of the forwarding node, or beam indication information corresponding to the beam of the forwarding node;
   where the measurement report information is sent according to a target measurement result, the target measurement result is obtained by the terminal according to a modulated signal sent by the forwarding node, the target measurement result includes beam quality corresponding to the beam of the forwarding node;
   the modulated signal is obtained by the forwarding node modulating the network device measurement signal, the modulated signal includes the network device measurement signal and a forwarding node measurement signal, the forwarding node measurement signal corresponds to the beam of the forwarding node.

In some embodiments, in an implementation, the method further includes:
sending configuration information to the terminal, where the configuration information includes at least one of the following:
at least one measurement occasion;
a beam identifier of the beam of the forwarding node; or
a forwarding node measurement signal identifier corresponding to the beam of the forwarding node.

The configuration information is sent to the terminal via the network device, which enables real-time adjustment to the configuration information, thus providing flexibility in configuration.

In some embodiments, in an implementation, the method further includes:
sending control configuration information to the forwarding node, where the control configuration information includes a control matrix, or the control configuration information includes a reflection coefficient matrix and the forwarding node measurement signal;
where the control matrix is determined by the reflection coefficient matrix and the forwarding node measurement signal.

It should be noted that through sending of the control configuration information, the forwarding node may accurately perform modulation, ensuring the accuracy of the modulated signal.

In some embodiments, in an implementation, the beam indication information includes at least one of the following:
a beam identifier; it should be noted that the beam identifier may be a beam index or a beam number.
a forwarding node measurement signal identifier corresponding to the beam; it should be noted that since each beam corresponds to a different forwarding node measurement signal, the forwarding node measurement signal may be used for beam indication. In some embodiments, the forwarding node measurement signal identifier may be a measurement signal index, an identifier of the sequence corresponding to the measurement signal, or a sequence corresponding to the measurement signal.

It should be noted that all descriptions of the network device in the above embodiments are applicable to the embodiments of the information transmission method and may achieve the same technical effect, so will not be repeated here.

As shown in FIG. 8, an embodiment of the present disclosure provides a signal measurement device 800, applied to a terminal and including:
a first receiving unit 801, configured to receive a modulated signal sent by a forwarding node, where the modulated signal is obtained by the forwarding node modulating a network device measurement signal, the modulated signal includes the network device measurement signal and a forwarding node measurement signal, the forwarding node measurement signal corresponds to a beam of the forwarding node;
a first obtaining unit 802, configured to obtain a target measurement result according to the modulated signal, where the target measurement result includes beam quality corresponding to the beam of the forwarding node.

In some embodiments, the device further includes:
a third sending unit, configured to send measurement report information to a network device according to the target measurement result, where the measurement report information includes at least one of the following: the beam quality corresponding to the beam of the forwarding node, or beam indication information corresponding to the beam of the forwarding node.

In some embodiments, the beam indication information includes at least one of the following:
a beam identifier; or
a forwarding node measurement signal identifier corresponding to the beam.

In some embodiments, the first receiving unit 801 is configured to:
obtain configuration information;
receive the modulated signal sent by the forwarding node through at least one beam during a measurement occasion indicated by the configuration information;
where the configuration information includes at least one of the following:
   at least one measurement occasion;
   a beam identifier of the beam of the forwarding node; or
   a forwarding node measurement signal identifier corresponding to the beam of the forwarding node.

It should be noted that this device embodiment corresponds one-to-one with the above method embodiment. All implementations in the above method embodiment are applicable to this device embodiment and may achieve the same technical effect.

It should be noted that the division of units in embodiments of the present disclosure is illustrative and is merely a logical functional division. In actual implementation, there may be other division methods. In addition, the functional units in the various embodiments of the present disclosure may be integrated into one processing unit, or each unit may exist physically separately, or two or more units may be integrated into one unit. The integrated units described above may be implemented in either hardware or software functional units.

If the integrated unit is implemented as a software functional unit and sold or used as an independent product, it may be stored in a processor-readable storage medium. According to this understanding, the technical solution of the present disclosure, or the part that contributes to the related technology, or all or part of the technical solution, may be embodied in the form of a software product. The computer software product is stored in a storage medium and includes several instructions to cause a computer device (which may be a personal computer, a server, or a network device, etc.) or a processor to perform all or part of the steps of the methods described in the various embodiments of the present disclosure. The aforementioned storage medium may include: USB flash drive, portable hard drive, read-only memory (ROM), random access memory (RAM), magnetic disk, optical disk, and other media that may store program code.

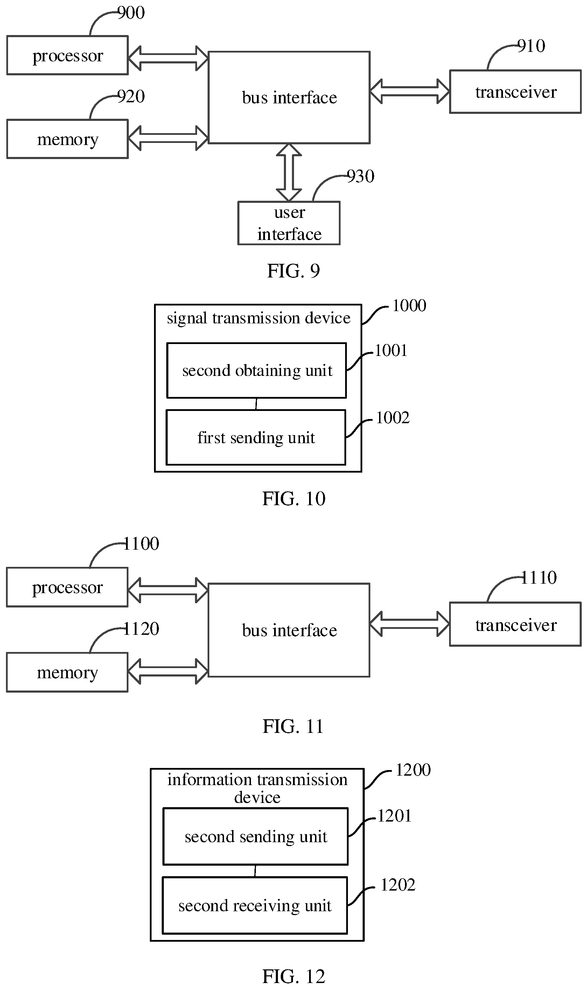

As shown in FIG. 9, an embodiment of the present disclosure further provides a terminal, including a processor 900, a transceiver 910, a memory 920, and a program stored in the memory 920 and executable on the processor 900; where the transceiver 910 is connected to the processor 900 and the memory 920 via a bus interface, and the processor 900 is configured to read the program in the memory and perform following processes:
receiving a modulated signal sent by a forwarding node via the transceiver, where the modulated signal is obtained by the forwarding node modulating a network device measurement signal, the modulated signal includes the network device measurement signal and a forwarding node measurement signal, the forwarding node measurement signal corresponds to a beam of the forwarding node;
obtaining a target measurement result according to the modulated signal, where the target measurement result includes beam quality corresponding to the beam of the forwarding node.

The transceiver 910 is configured to receive and send data under control of the processor 900.

In FIG. 9, the bus architecture may include any number of interconnected buses and bridges, specifically linking together various circuits of one or more processors represented by the processor 900 and a memory represented by the memory 920. The bus architecture may also link together various other circuits such as peripherals, regulators and power management circuits, which are well known in the art and will not be described further herein. The bus interface provides the interface. The transceiver 910 may be a combination of multiple components, including a transmitter and a receiver, providing a unit for communicating with various other devices over a transmission medium, including wireless channels, wired channels, optical fibers, etc. For different user devices, the user interface 930 may also be an interface that may connect to external or internal devices, including but not limited to keypads, displays, speakers, microphones, joysticks, etc.

The processor 900 is responsible for managing the bus architecture and general processing, and the memory 920 may store the data used by the processor 900 during operation.

In some embodiments, the processor 900 may be a central processing unit (CPU), an application specific integrated circuit (ASIC), a field-programmable gate array (FPGA), or a complex programmable logic device (CPLD), and the processor may also adopt a multi-core architecture.

The processor performs any of the methods provided in the embodiments of the present disclosure by invoking a computer program stored in the memory, in accordance with the obtained executable instructions. The processor and the memory may also be physically separated.

In some embodiments, the processor is configured to read the computer program in the memory and perform following operations:
sending measurement report information to a network device according to the target measurement result, where the measurement report information includes at least one of the following: the beam quality corresponding to the beam of the forwarding node, or beam indication information corresponding to the beam of the forwarding node.

In some embodiments, the beam indication information includes at least one of the following:
a beam identifier; or
a forwarding node measurement signal identifier corresponding to the beam.

In some embodiments, the processor is configured to read the computer program in the memory and perform following operations:
obtaining configuration information;
receiving the modulated signal sent by the forwarding node through at least one beam during a measurement occasion indicated by the configuration information;
where the configuration information includes at least one of the following:
   at least one measurement occasion;
   a beam identifier of the beam of the forwarding node; or
   a forwarding node measurement signal identifier corresponding to the beam of the forwarding node.

At least one embodiment of the present disclosure further provides a terminal, including a memory, a processor, and a computer program stored in the memory and executable on the processor. When the processor executes the program, various processes in the signal measurement method embodiments applied to the terminal are implemented and the same technical effect is achieved. To avoid repetition, these will not be described again here.

At least one embodiment of the present disclosure further provides a computer-readable storage medium having a computer program stored thereon. When the program is executed by a processor, various processes in the signal measurement method embodiments applied to the terminal are implemented and the same technical effect is achieved. To avoid repetition, these will not be described again here. The computer-readable storage medium mentioned above includes, for example, a read-only memory (ROM), a random access memory (RAM), a magnetic disk, or an optical disk.

As shown in FIG. 10, an embodiment of the present disclosure provides a signal transmission device 1000, applied to a forwarding node and including:
a second obtaining unit 1001, configured to modulate a received network device measurement signal to obtain a modulated signal, where the modulated signal includes the network device measurement signal and a forwarding node measurement signal, the forwarding node measurement signal corresponds to a beam of the forwarding node;
a first sending unit 1002, configured to send the modulated signal to a terminal.

In some embodiments, the second obtaining unit 1001 is configured to:
switch a control matrix at a preset time point to modulate the received network device measurement signal to obtain the modulated signal.

In some embodiments, the implementation of switching a control matrix at a preset time point to modulate the received network device measurement signal to obtain the modulated signal includes:
obtaining control configuration information, where the control configuration information includes the control matrix, or the control configuration information includes a reflection coefficient matrix and the forwarding node measurement signal;
switching the control matrix at the preset time point according to the control configuration information to modulate the received network device measurement signal to obtain the modulated signal;
where the control matrix is determined by the reflection coefficient matrix and the forwarding node measurement signal.

It should be noted that this device embodiment corresponds one-to-one with the above method embodiment. All implementations in the above method embodiment are applicable to this device embodiment and may achieve the same technical effect.

It should be noted that the division of units in embodiments of the present disclosure is illustrative and is merely a logical functional division. In actual implementation, there may be other division methods. In addition, the functional units in the various embodiments of the present disclosure may be integrated into one processing unit, or each unit may exist physically separately, or two or more units may be integrated into one unit. The integrated units described above may be implemented in either hardware or software functional units.

If the integrated unit is implemented as a software functional unit and sold or used as an independent product, it may be stored in a processor-readable storage medium. According to this understanding, the technical solution of the present disclosure, or the part that contributes to the related technology, or all or part of the technical solution, may be embodied in the form of a software product. The computer software product is stored in a storage medium and includes several instructions to cause a computer device (which may be a personal computer, a server, or a network device, etc.) or a processor to perform all or part of the steps of the methods described in the various embodiments of the present disclosure. The aforementioned storage medium may include: USB flash drive, portable hard drive, read-only memory (ROM), random access memory (RAM), magnetic disk, optical disk, and other media that may store program code.

As shown in FIG. 11, an embodiment of the present disclosure further provides a forwarding node, including a processor 1100, a transceiver 1110, a memory 1120, and a program stored in the memory 1120 and executable on the processor 1100; where the transceiver 1110 is connected to the processor 1100 and the memory 1120 via a bus interface, and the processor 1100 is configured to read the program in the memory and perform following processes:
modulating a received network device measurement signal to obtain a modulated signal, where the modulated signal includes the network device measurement signal and a forwarding node measurement signal, the forwarding node measurement signal corresponds to a beam of the forwarding node;
sending the modulated signal to a terminal via the transceiver.

The transceiver 1110 is configured to receive and send data under control of the processor 1100.

In FIG. 11, the bus architecture may include any number of interconnected buses and bridges, specifically linking together various circuits of one or more processors represented by the processor 1100 and a memory represented by the memory 1120. The bus architecture may also link together various other circuits such as peripherals, regulators and power management circuits, which are well known in the art and will not be described further herein. The bus interface provides the interface. The transceiver 1110 may be a combination of multiple components, including a transmitter and a receiver, providing a unit for communicating with various other devices over a transmission medium, including wireless channels, wired channels, optical fibers, etc.

The processor 1100 is responsible for managing the bus architecture and general processing, and the memory 1120 may store the data used by the processor 1100 during operation.

In some embodiments, the processor 1100 may be a CPU, an ASIC, a FPGA or a CPLD, and the processor may also adopt a multi-core architecture.

The processor performs any of the methods provided in the embodiments of the present disclosure by invoking a computer program stored in the memory, in accordance with the obtained executable instructions. The processor and the memory may also be physically separated.

In some embodiments, the processor is configured to read the computer program in the memory and perform following operations:
switching a control matrix at a preset time point to modulate the received network device measurement signal to obtain the modulated signal.

In some embodiments, the processor is configured to read the computer program in the memory and perform following operations:
obtaining control configuration information, where the control configuration information includes the control matrix, or the control configuration information includes a reflection coefficient matrix and the forwarding node measurement signal;
switching the control matrix at the preset time point according to the control configuration information to modulate the received network device measurement signal to obtain the modulated signal;
where the control matrix is determined by the reflection coefficient matrix and the forwarding node measurement signal.

It should be noted that the forwarding node provided in the embodiment of the present disclosure can implement all the method steps implemented in the above method embodiment and achieve the same technical effects. Therefore, the parts and beneficial effects that are the same as those in the method embodiment will not be described in detail here.

An embodiment of the present disclosure further provides a computer-readable storage medium storing a computer program thereon, where the computer program, when executed by a processor, implements the steps of a signal transmission method applied to a forwarding node. The processor-readable storage medium may be any available medium or data storage device that the processor may access, including but not limited to magnetic memory (e.g., floppy disk, hard disk, magnetic tape, magneto-optical disk (MO), etc.), optical memory (e.g., compact disk (CD), digital versatile disc (DVD), Blu-ray disc (BD), high-definition versatile disc (HVD), etc.), and semiconductor memory (e.g., read-only memory (ROM), erasable programmable read-only memory (EPROM), electrically erasable programmable read-only memory (EEPROM), non-volatile memory (NAND FLASH), solid state disk (SSD)), etc.

As shown in FIG. 12, an embodiment of the present disclosure provides an information transmission device 1200, applied to a network device and including:
a second sending unit 1201, configured to send a network device measurement signal to a forwarding node;
a second receiving unit 1202, configured to receive measurement report information sent by a terminal, where the measurement report information includes at least one of the following: beam quality corresponding to a beam of the forwarding node, or beam indication information corresponding to the beam of the forwarding node;
where the measurement report information is sent according to a target measurement result, the target measurement result is obtained by the terminal according to a modulated signal sent by the forwarding node, the target measurement result includes beam quality corresponding to the beam of the forwarding node;
the modulated signal is obtained by the forwarding node modulating the network device measurement signal, the modulated signal includes the network device measurement signal and a forwarding node measurement signal, the forwarding node measurement signal corresponds to the beam of the forwarding node.

In some embodiments, the device further includes:
a fourth sending unit, configured to send configuration information to the terminal, where the configuration information includes at least one of the following:
at least one measurement occasion;
a beam identifier of the beam of the forwarding node; or
a forwarding node measurement signal identifier corresponding to the beam of the forwarding node.

In some embodiments, the device further includes:
a fifth sending unit, configured to send control configuration information to the forwarding node, wherei the control configuration information includes a control matrix, or the control configuration information includes a reflection coefficient matrix and the forwarding node measurement signal;
where the control matrix is determined by the reflection coefficient matrix and the forwarding node measurement signal.

In some embodiments, the beam indication information includes at least one of the following:
a beam identifier; or
a forwarding node measurement signal identifier corresponding to the beam.

It should be noted that this device embodiment corresponds one-to-one with the above method embodiment. All implementations in the above method embodiment are applicable to this device embodiment and may achieve the same technical effect.

It should be noted that the division of units in embodiments of the present disclosure is illustrative and is merely a logical functional division. In actual implementation, there may be other division methods. In addition, the functional units in the various embodiments of the present disclosure may be integrated into one processing unit, or each unit may exist physically separately, or two or more units may be integrated into one unit. The integrated units described above may be implemented in either hardware or software functional units.

If the integrated unit is implemented as a software functional unit and sold or used as an independent product, it may be stored in a processor-readable storage medium. According to this understanding, the technical solution of the present disclosure, or the part that contributes to the related technology, or all or part of the technical solution, may be embodied in the form of a software product. The computer software product is stored in a storage medium and includes several instructions to cause a computer device (which may be a personal computer, a server, or a network device, etc.) or a processor to perform all or part of the steps of the methods described in the various embodiments of the present disclosure. The aforementioned storage medium may include: USB flash drive, portable hard drive, read-only memory (ROM), random access memory (RAM), magnetic disk, optical disk, and other media that may store program code.

An embodiment of the present disclosure further provides a network device, the structure of which is shown in FIG. 11.

The processor is configured to read the program in the memory and perform following processes:
sending a network device measurement signal to a forwarding node via the transceiver;
receiving measurement report information sent by a terminal, where the measurement report information includes at least one of the following: beam quality corresponding to a beam of the forwarding node, or beam indication information corresponding to the beam of the forwarding node;
where the measurement report information is sent according to a target measurement result, the target measurement result is obtained by the terminal according to a modulated signal sent by the forwarding node, the target measurement result includes beam quality corresponding to the beam of the forwarding node;
the modulated signal is obtained by the forwarding node modulating the network device measurement signal, the modulated signal includes the network device measurement signal and a forwarding node measurement signal, the forwarding node measurement signal corresponds to the beam of the forwarding node.

In some embodiments, the processor is configured to read the computer program in the memory and perform following operations:
sending configuration information to the terminal via the transceiver, where the configuration information includes at least one of the following:
at least one measurement occasion;
a beam identifier of the beam of the forwarding node; or
a forwarding node measurement signal identifier corresponding to the beam of the forwarding node.

In some embodiments, the processor is configured to read the computer program in the memory and perform following operations:
sending control configuration information to the forwarding node via the transceiver, where the control configuration information includes a control matrix, or the control configuration information includes a reflection coefficient matrix and the forwarding node measurement signal;
where the control matrix is determined by the reflection coefficient matrix and the forwarding node measurement signal.

In some embodiments, the beam indication information includes at least one of the following:
a beam identifier; or
a forwarding node measurement signal identifier corresponding to the beam.

It should be noted that the network device provided in the embodiment of the present disclosure can implement all the method steps implemented in the above method embodiment and achieve the same technical effects. Therefore, the parts and beneficial effects that are the same as those in the method embodiment will not be described in detail here.

An embodiment of the present disclosure further provides a computer-readable storage medium storing a computer program thereon, where the computer program, when executed by a processor, implements the steps of an information transmission method applied to a network device. The processor-readable storage medium may be any available medium or data storage device that the processor may access, including but not limited to magnetic memory (e.g., floppy disk, hard disk, magnetic tape, magneto-optical disk (MO), etc.), optical memory (e.g., CD, DVD, BD, HVD, etc.), and semiconductor memory (e.g., ROM, EPROM, EEPROM, non-volatile memory (NAND FLASH), solid state disk (SSD)), etc.

Those skilled in the art will understand that embodiments of the present disclosure may be provided as methods, systems, or computer program products. Therefore, the present disclosure may take the form of a completely hardware embodiment, a completely software embodiment, or an embodiment combining software and hardware aspects. Furthermore, the present disclosure may take the form of a computer program product implemented on one or more computer-usable storage media (including, but not limited to, disk storage and optical storage) containing computer-usable program code.

The present disclosure is described with reference to flowcharts and/or block diagrams of methods, device (systems), and computer program products according to embodiments of the present disclosure. It should be understood that each process and/or block in the flowcharts and/or block diagrams, as well as combinations of processes and/or blocks in the flowcharts and/or block diagrams, may be implemented by computer-executable instructions. These computer-executable instructions may be provided to a processor of a general-purpose computer, a special-purpose computer, an embedded processor, or other programmable data processing device to produce a machine, such that the instructions, which are executed via the processor of the computer or other programmable data processing device, produce means for implementing the functions specified in one or more processes of the flowcharts and/or one or more blocks of the block diagrams.

These processor-executable instructions may also be stored in a processor-readable memory that may instruct a computer or other programmable data processing device to operate in a particular manner, such that the instructions stored in the processor-readable memory produce an article of manufacture including instruction means for implementing the functions specified in one or more processes of the flowcharts and/or one or more blocks of the block diagrams.

These processor-executable instructions may also be loaded onto a computer or other programmable data processing device to cause a series of operational steps to be performed on the computer or other programmable device to produce a computer-implemented process, such that the instructions, which are executed on the computer or other programmable device, provide steps for implementing the functions specified in one or more processes of the flowcharts and/or one or more blocks of the block diagrams.

It should be noted that the above division of modules is only a logical functional division. In actual implementation, they may be fully or partially integrated into a single physical entity, or may be physically separated. Furthermore, these modules may be implemented entirely in software called through processing components; or may also be implemented entirely in hardware; or some modules may be implemented by calling software through processing components, while others may be implemented in hardware. For example, a module may be a separate processing element, or may be integrated into a chip of the aforementioned device. Alternatively, it may be stored in the memory of the aforementioned device as program code, and called by a processing element of the aforementioned device to perform functions of the module determined above. The implementation of other modules is similar. Furthermore, these modules may be integrated together, either in whole or in part, or implemented independently. The processing element described here may be an integrated circuit with signal processing capabilities. In the implementation process, each step of the above method or each module may be implemented by the integrated logic circuit of the hardware in the processor element or by instructions in the form of software.

For example, each module, unit, subunit, or submodule may be one or more integrated circuits configured to implement the above methods, such as one or more application specific integrated circuits (ASICs), one or more digital signal processors (DSPs), or one or more field programmable gate arrays (FPGAs), etc. For example, when one of the above modules is implemented in the form of a processing element calling program codes, the processing element may be a general-purpose processor, such as a central processing unit (CPU) or other processors that may call program codes. For example, these modules may be integrated together to be implemented as a System-On-a-Chip (SoC).

The terms "first", "second", etc., used in the specification and claims of the present disclosure are used to distinguish similar objects and are not necessarily used to describe a specific order or sequence. It should be understood that the terms used in this way may be interchanged where appropriate so that the embodiments of the present disclosure described herein may be implemented, for example, in a sequence other than those illustrated or described herein. Furthermore, the terms "comprising" and "having", and any variations thereof, are intended to cover non-exclusive inclusion, such that a process, method, system, product, or device that includes a series of steps or units is not necessarily limited to those steps or units that are explicitly listed, but may include other steps or units that are not explicitly listed or that are inherent to such process, method, product, or device. Furthermore, the use of "and/or" in the specification and claims indicates at least one of the connected objects, such as A and/or B and/or C, indicating seven possibilities: A alone, B alone, C alone, A and B both present, B and C both present, A and C both present, and A, B and C all present. Similarly, the phrase "at least one of A and B" used in the specification and claims should be understood as "A alone, B alone, or A and B both present".

Obviously, those skilled in the art may make various modifications and variations to the present disclosure without departing from the spirit and scope of the present disclosure. Thus, if these modifications and variations of the present disclosure fall within the scope of the claims of the present disclosure and their equivalents, the present disclosure is also intended to include these modifications and variations.

## Claims

1. A signal measurement method, performed by a terminal, the method comprising:
receiving a modulated signal sent by a forwarding node, wherein the modulated signal is obtained by the forwarding node modulating a network device measurement signal, the modulated signal comprises the network device measurement signal and a forwarding node measurement signal, the forwarding node measurement signal corresponds to a beam of the forwarding node;
obtaining a target measurement result according to the modulated signal, wherein the target measurement result comprises beam quality corresponding to the beam of the forwarding node.

2. The method according to claim 1, further comprising:
sending measurement report information to a network device according to the target measurement result, wherein the measurement report information comprises at least one of the following: the beam quality corresponding to the beam of the forwarding node, or beam indication information corresponding to the beam of the forwarding node.

3. The method according to claim 1 or 2, wherein the beam indication information comprises at least one of the following:
a beam identifier; or
a forwarding node measurement signal identifier corresponding to the beam.

4. The method according to claim 1, wherein the receiving a modulated signal sent by a forwarding node comprises:
obtaining configuration information;
receiving the modulated signal sent by the forwarding node through at least one beam during a measurement occasion indicated by the configuration information;
wherein the configuration information comprises at least one of the following:
at least one measurement occasion;
a beam identifier of the beam of the forwarding node; or
a forwarding node measurement signal identifier corresponding to the beam of the forwarding node.

5. A signal transmission method, performed by a forwarding node, the method comprising:
modulating a received network device measurement signal to obtain a modulated signal, wherein the modulated signal comprises the network device measurement signal and a forwarding node measurement signal, the forwarding node measurement signal corresponds to a beam of the forwarding node;
sending the modulated signal to a terminal.

6. The method according to claim 5, wherein the modulating a received network device measurement signal to obtain a modulated signal comprises:
switching a control matrix at a preset time point to modulate the received network device measurement signal to obtain the modulated signal.

7. The method according to claim 6, wherein the switching a control matrix at a preset time point to modulate the received network device measurement signal to obtain the modulated signal comprises:
obtaining control configuration information, wherein the control configuration information comprises the control matrix, or the control configuration information comprises a reflection coefficient matrix and the forwarding node measurement signal;
switching the control matrix at the preset time point according to the control configuration information to modulate the received network device measurement signal to obtain the modulated signal;
wherein the control matrix is determined by the reflection coefficient matrix and the forwarding node measurement signal.

8. An information transmission method, performed by a network device, the method comprising:
sending a network device measurement signal to a forwarding node;
receiving measurement report information sent by a terminal, wherein the measurement report information comprises at least one of the following: beam quality corresponding to a beam of the forwarding node, or beam indication information corresponding to the beam of the forwarding node;
wherein the measurement report information is sent according to a target measurement result, the target measurement result is obtained by the terminal according to a modulated signal sent by the forwarding node, the target measurement result comprises beam quality corresponding to the beam of the forwarding node;
the modulated signal is obtained by the forwarding node modulating the network device measurement signal, the modulated signal comprises the network device measurement signal and a forwarding node measurement signal, the forwarding node measurement signal corresponds to the beam of the forwarding node.

9. The method according to claim 8, further comprising:
sending configuration information to the terminal, wherein the configuration information comprises at least one of the following:
at least one measurement occasion;
a beam identifier of the beam of the forwarding node; or
a forwarding node measurement signal identifier corresponding to the beam of the forwarding node.

10. The method according to claim 8, further comprising:
sending control configuration information to the forwarding node, wherein the control configuration information comprises a control matrix, or the control configuration information comprises a reflection coefficient matrix and the forwarding node measurement signal;
wherein the control matrix is determined by the reflection coefficient matrix and the forwarding node measurement signal.

11. The method according to claim 8, wherein the beam indication information comprises at least one of the following:
a beam identifier; or
a forwarding node measurement signal identifier corresponding to the beam.

12. A terminal, comprising a memory, a transceiver, and a processor;
wherein the memory is configured to store a computer program; the transceiver is configured to send and receive data under control of the processor; and the processor is configured to read the computer program in the memory and perform following operations:
receiving a modulated signal sent by a forwarding node via the transceiver, wherein the modulated signal is obtained by the forwarding node modulating a network device measurement signal, the modulated signal comprises the network device measurement signal and a forwarding node measurement signal, the forwarding node measurement signal corresponds to a beam of the forwarding node;
obtaining a target measurement result according to the modulated signal, wherein the target measurement result comprises beam quality corresponding to the beam of the forwarding node.

13. The terminal according to claim 12, wherein the processor is configured to read the computer program in the memory and perform following operations:
sending measurement report information to a network device according to the target measurement result, wherein the measurement report information comprises at least one of the following: the beam quality corresponding to the beam of the forwarding node, or beam indication information corresponding to the beam of the forwarding node.

14. The terminal according to claim 12 or 13, wherein the beam indication information comprises at least one of the following:
a beam identifier; or
a forwarding node measurement signal identifier corresponding to the beam.

15. The terminal according to claim 12, wherein the processor is configured to read the computer program in the memory and perform following operations:
obtaining configuration information;
receiving the modulated signal sent by the forwarding node through at least one beam during a measurement occasion indicated by the configuration information;
wherein the configuration information comprises at least one of the following:
at least one measurement occasion;
a beam identifier of the beam of the forwarding node; or
a forwarding node measurement signal identifier corresponding to the beam of the forwarding node.

16. A forwarding node, comprising a memory, a transceiver, and a processor;
wherein the memory is configured to store a computer program; the transceiver is configured to send and receive data under control of the processor; and the processor is configured to read the computer program in the memory and perform following operations:
modulating a received network device measurement signal to obtain a modulated signal, wherein the modulated signal comprises the network device measurement signal and a forwarding node measurement signal, the forwarding node measurement signal corresponds to a beam of the forwarding node;
sending the modulated signal to a terminal via the transceiver.

17. The forwarding node according to claim 16, wherein the processor is configured to read the computer program in the memory and perform following operations:
switching a control matrix at a preset time point to modulate the received network device measurement signal to obtain the modulated signal.

18. The forwarding node according to claim 17, wherein the processor is configured to read the computer program in the memory and perform following operations:
obtaining control configuration information, wherein the control configuration information comprises the control matrix, or the control configuration information comprises a reflection coefficient matrix and the forwarding node measurement signal;
switching the control matrix at the preset time point according to the control configuration information to modulate the received network device measurement signal to obtain the modulated signal;
wherein the control matrix is determined by the reflection coefficient matrix and the forwarding node measurement signal.

19. A network device, comprising a memory, a transceiver, and a processor;
wherein the memory is configured to store a computer program; the transceiver is configured to send and receive data under control of the processor; and the processor is configured to read the computer program in the memory and perform following operations:
sending a network device measurement signal to a forwarding node via the transceiver;
receiving measurement report information sent by a terminal, wherein the measurement report information comprises at least one of the following: beam quality corresponding to a beam of the forwarding node, or beam indication information corresponding to the beam of the forwarding node;
wherein the measurement report information is sent according to a target measurement result, the target measurement result is obtained by the terminal according to a modulated signal sent by the forwarding node, the target measurement result comprises beam quality corresponding to the beam of the forwarding node;
the modulated signal is obtained by the forwarding node modulating the network device measurement signal, the modulated signal comprises the network device measurement signal and a forwarding node measurement signal, the forwarding node measurement signal corresponds to the beam of the forwarding node.

20. The network device according to claim 19, wherein the processor is configured to read the computer program in the memory and perform following operations:
sending configuration information to the terminal via the transceiver, wherein the configuration information comprises at least one of the following:
at least one measurement occasion;
a beam identifier of the beam of the forwarding node; or
a forwarding node measurement signal identifier corresponding to the beam of the forwarding node.

21. The network device according to claim 19, wherein the processor is configured to read the computer program in the memory and perform following operations:
sending control configuration information to the forwarding node via the transceiver, wherein the control configuration information comprises a control matrix, or the control configuration information comprises a reflection coefficient matrix and the forwarding node measurement signal;
wherein the control matrix is determined by the reflection coefficient matrix and the forwarding node measurement signal.

22. The network device according to claim 19, wherein the beam indication information comprises at least one of the following:
a beam identifier; or
a forwarding node measurement signal identifier corresponding to the beam.

23. A signal measurement device, applied to a terminal, the device comprising:
a first receiving unit, configured to receive a modulated signal sent by a forwarding node, wherein the modulated signal is obtained by the forwarding node modulating a network device measurement signal, the modulated signal comprises the network device measurement signal and a forwarding node measurement signal, the forwarding node measurement signal corresponds to a beam of the forwarding node;
a first obtaining unit, configured to obtain a target measurement result according to the modulated signal, wherein the target measurement result comprises beam quality corresponding to the beam of the forwarding node.

24. The device according to claim 23, further comprising:
a third sending unit, configured to send measurement report information to a network device according to the target measurement result, wherein the measurement report information comprises at least one of the following: the beam quality corresponding to the beam of the forwarding node, or beam indication information corresponding to the beam of the forwarding node.

25. The device according to claim 23 or 24, wherein the beam indication information comprises at least one of the following:
a beam identifier; or
a forwarding node measurement signal identifier corresponding to the beam.

26. The device according to claim 23, wherein the first receiving unit is configured to:
obtain configuration information;
receive the modulated signal sent by the forwarding node through at least one beam during a measurement occasion indicated by the configuration information;
wherein the configuration information comprises at least one of the following:
at least one measurement occasion;
a beam identifier of the beam of the forwarding node; or
a forwarding node measurement signal identifier corresponding to the beam of the forwarding node.

27. A signal transmission device, applied to a forwarding node, the device comprising:
a second obtaining unit, configured to modulate a received network device measurement signal to obtain a modulated signal, wherein the modulated signal comprises the network device measurement signal and a forwarding node measurement signal, the forwarding node measurement signal corresponds to a beam of the forwarding node;
a first sending unit, configured to send the modulated signal to a terminal.

28. The device according to claim 27, wherein the second obtaining unit is configured to:
switch a control matrix at a preset time point to modulate the received network device measurement signal to obtain the modulated signal.

29. The device according to claim 28, wherein the implementation of switching a control matrix at a preset time point to modulate the received network device measurement signal to obtain the modulated signal comprises:
obtaining control configuration information, wherein the control configuration information comprises the control matrix, or the control configuration information comprises a reflection coefficient matrix and the forwarding node measurement signal;
switching the control matrix at the preset time point according to the control configuration information to modulate the received network device measurement signal to obtain the modulated signal;
wherein the control matrix is determined by the reflection coefficient matrix and the forwarding node measurement signal.

30. An information transmission device, applied to a network device, the device comprising:
a second sending unit, configured to send a network device measurement signal to a forwarding node;
a second receiving unit, configured to receive measurement report information sent by a terminal, wherein the measurement report information comprises at least one of the following: beam quality corresponding to a beam of the forwarding node, or beam indication information corresponding to the beam of the forwarding node;
wherein the measurement report information is sent according to a target measurement result, the target measurement result is obtained by the terminal according to a modulated signal sent by the forwarding node, the target measurement result comprises beam quality corresponding to the beam of the forwarding node;
the modulated signal is obtained by the forwarding node modulating the network device measurement signal, the modulated signal comprises the network device measurement signal and a forwarding node measurement signal, the forwarding node measurement signal corresponds to the beam of the forwarding node.

31. The device according to claim 30, further comprising:
a fourth sending unit, configured to send configuration information to the terminal, wherein the configuration information comprises at least one of the following:
at least one measurement occasion;
a beam identifier of the beam of the forwarding node; or
a forwarding node measurement signal identifier corresponding to the beam of the forwarding node.

32. The device according to claim 30, further comprising:
a fifth sending unit, configured to send control configuration information to the forwarding node, wherein the control configuration information comprises a control matrix, or the control configuration information comprises a reflection coefficient matrix and the forwarding node measurement signal;
wherein the control matrix is determined by the reflection coefficient matrix and the forwarding node measurement signal.

33. The device according to claim 30, wherein the beam indication information comprises at least one of the following:
a beam identifier; or
a forwarding node measurement signal identifier corresponding to the beam.

34. A processor-readable storage medium, storing a computer program, wherein the computer program is configured to cause a processor to perform the method according to any one of claims 1 to 11.
